Europäisches Patentamt

(19)    European Patent Office

Office européen des brevets

(11)    **EP 0 481 753 B1**

## (12)    EUROPEAN PATENT SPECIFICATION

(45) Date of publication and mention
of the grant of the patent:
**10.07.1996 Bulletin 1996/28**

(51) Int. Cl.$^6$: **B29D 17/00**, G11B 7/26,
C25D 1/02

(21) Application number: **91309524.6**

(22) Date of filing: **16.10.1991**

(54) **Molding roll, method for manufacturing it, and apparatus for forming substrate sheet for optical recording medium**

Walze, Verfahren zu ihrer Herstellung und Vorrichtung zur Herstellung einer Substrate für einen optischen Aufzeichnungsträger

Rouleau à moulage, procédé pour sa fabrication, et dispositif pour la fabrication d'un substrat pour un support d'enregistrement optique

(84) Designated Contracting States:
**DE FR GB IT NL**

(30) Priority: **19.10.1990 JP 279447/90**
**18.04.1991 JP 112153/91**
**18.04.1991 JP 112154/91**

(43) Date of publication of application:
**22.04.1992 Bulletin 1992/17**

(73) Proprietor: **CANON KABUSHIKI KAISHA**
**Tokyo (JP)**

(72) Inventor: **Imataki, Hiroyuki,**
**c/o Canon Kabushiki Kaisha**
**Kawasaki-shi, Kanagawa-ken (JP)**

(74) Representative: **Beresford, Keith Denis Lewis et al**
**BERESFORD & Co.**
**2-5 Warwick Court**
**High Holborn**
**London WC1R 5DJ (GB)**

(56) References cited:
**EP-A- 0 387 037          US-A- 4 294 782**
**US-A- 4 836 874**

• **PATENT ABSTRACTS OF JAPAN vol. 6, no. 244 (C-138)(1122) 2 December 1982 & JP-A-57 143 484 (CHIYEAN SEISAKUSHO) 4 September 1982**
• **PATENT ABSTRACTS OF JAPAN vol. 011, no. 305 (P-623)6 October 1987 & JP-A-62 095 749 (SEIKO EPSON CORP.) 2 May 1987**

## Description

The present invention relates to a method for manufacturing a molding roll which can be used to mold, for example, holograms and high density information recording media, such as optical discs and optical cards. Such media can enable information to be recorded and reproduced by change in optical characteristics such as reflectance of light e.g. from a laser beam. The invention also provides apparatus for manufacturing substrate sheets for optical recording media, and a method for making these substrate sheets in which a seamless molding roll made by the aforesaid method is used.

Up to now molded articles having a micron order or sub-micron order fine pattern on the surfaces thereof have been continuously manufactured, for example using the molding roll method described in International Publication WO88/03311. Such articles have included substrates for optical recording media, holograms and the like.

This type of molding roll can be manufactured by the following known methods:

(1) Mechanically cutting the surface of the roller directly to by means of a diamond bit or the like,

(2) Coating the roller with a photosensitive material such as a photoresist, exposing it to light by means of a laser and then forming a relief pattern on the exposed roller by means of etching or lift-off; and

(3) Forming a relief pattern on a plate and then winding the plate onto the roller.

However, conventional methods have the following drawbacks when used in the production of fine patterns. Cutting the surface of the roller directly by a diamond bitt of the like suffers from the disadvantage that the fineness of the pattern is limited depending upon the size of the cutting blade, the accuracy of the feed pitch and the rotary accuracy of the roller. Jitter, vibratory motion and the like are detrimental to the fineness of the pattern. In the case of pre-grooves and pre-formats for example, which are required to be transferred to the substrates of optical discs and the optical cards and which are now being investigated as information recording media, a fine pattern is required which is of size about 0.5 to 5 $\mu$m and of depth 5 to 500 nm (50 to 5000 Å). It is difficult to provide the required accuracy by mechanical methods. The use of photosensitive material as described in paragraph 2 also suffers from difficulties in the achievement of sufficient accuracy, and requires large apparatus and large investment in production facilities. The forming roll in use has to be resistant to temperatures of 300°C or below and pressures of 30 kg/cm$^2$ or below during the resin molding process. The method set out in paragraph 3 above which involves winding a plate around a stamper does not meet the requirements of durability. For this reason, various fixtures are required and the method of fixing is often complex. In addition, the treatment of a step which may be formed between the edge face of the stamper and the surface of the roll base also involves difficulties.

US patent No 4836874 discloses the continuous mass production of compact discs by continuously rotating a master roller about whose periphery a plurality of optical disc patterns are sequentially arranged in order to form inverse patterns on an elongated film fed to the roller at successive contact locations spaced apart from one another lengthwise of the film during each rotation.

The master roller has optical disc patterns carried on an outer resin layer, and the pattern is transferred to the resin layer by passing the resin layer, together with a so called "father sheet", between a core roller and a pressure roller so that the resin layer together with the father sheet become wrapped around the core roller. Thereafter the father sheet is removed to provide a core roller surrounded by a resin coating formed with a reverse pattern opposite to that originally provided on the father sheet.

JP-A-57 143 484 discloses the manufacture of a seamless hollow metallic body by electroforming.

The present invention is concerned with the manufacture of a roll-shaped and seamless member having a relief pattern on its peripheral surface, and which member does not tend to develop residual stress at the time when it is formed so that it can provide a roll stamper which is generally free from distortion or deformation.

This problem is solved by the method as set out in claim 1 of the accompanying claims.

In particular, the present method enables a roll shaped stamper having on its surface a highly accurate and fine relief pattern to be manufactured directly in the form of a roll by inserting a flexible master with a pattern corresponding to the required relief pattern on the inner peripheral surface of a cylindrical mold, forming a film on the flexible substrate by means of electroforming and then peeling the flexible substrate from the electroforming film. This manufacturing operation is inexpensive to carry out, and the resulting roll shaped stamper can be fixed onto a roll base, thereby readily providing a seamless molding roll.

How the invention may be put into effect will now be described by way of example only, with reference to the accompanying drawings.

## BRIEF DESCRIPTION OF THE DRAWINGS

Figs. 1A and 1B are schematic sectional views of a molding roll of the present invention.

Fig. 2A is a schematic sectional view of a flexible master used for manufacturing the molding roll of the present invention.

Fig. 2B is a schematic sectional view of a cylindrical mold in which the flexible master is installed.

Figs. 3A and 3B are schematic views of the cylindrical mold shown in Fig. 2B having an electroforming film deposited on the cyclindrical mold surface.

Fig. 4 is a schematic view illustrating another embodiment of an electroforming method in manufacturing the molding roll of the present invention.

Figs. 5A, 5B and 5C in series illustrate one embodiment of manufacturing steps of a flexible master of the present invention.

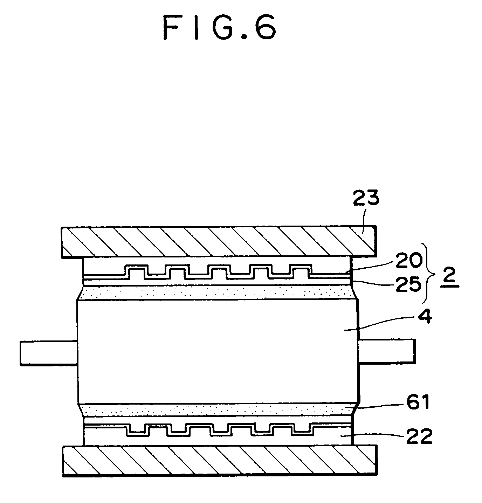

Fig. 6 is a schematic view illustrating a step in which the molding roll is manufactured by the use of a roll-shaped stamper.

Figs. 7A and 7B show schematic sectional views of the molding roll in which the inside peripheral surface of the roll-shaped stamper is tapered and then detachably fittted to a roll base, Fig. 7A being a schematic section illustrating a step for forming the molding roll and Fig. 7B being a schematic section of the molding roll.

Fig. 8 is an illustrative view of the preformat of an optical card.

Fig. 9 is an enlarged view of the preformat pattern of the flexible master.

Fig. 10 is a schematic view of the flexible master along the line A-A′ in Fig. 9 which is disposed in parallel with the peripheral direction of the inside peripheral surface of a cylindrical mold.

Fig. 11 is a schematic view of the flexible master along the line B-B′ in Fig. 9 which is disposed in parallel with the peripheral direction of the inside peripheral surface of the cylindrical mold.

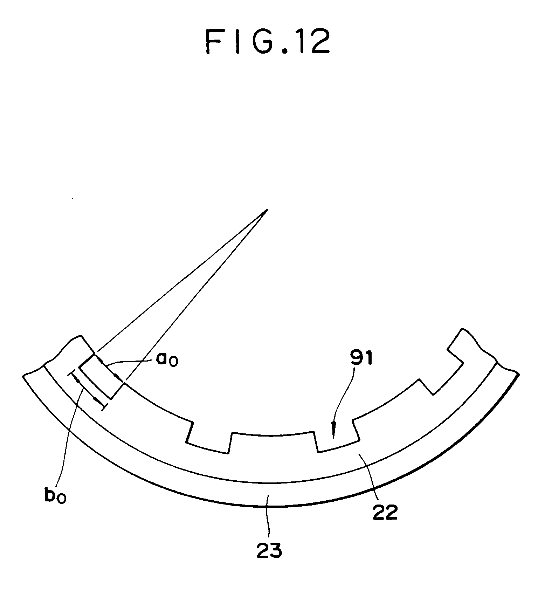

Fig. 12 is a schematic sectional view of the cylindrical mold in Fig. 10.

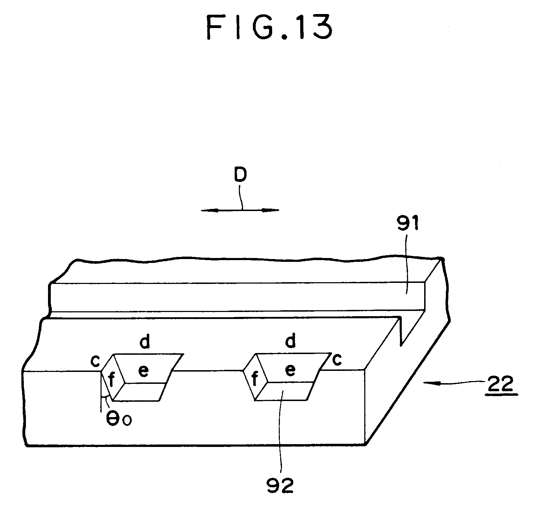

Fig. 13 is a schematic view of a preformat pattern portion in another embodiment of the cylindrical mold having the mounted flexible master which is used in manufacturing the molding roll of the present invention.

Figs. 14A and 14B are schematic views of a preformat pattern portion in still another embodiment of the cylindrical mold having the mounted flexible master which is used in manufacturing the molding roll of the present invention.

Fig. 15 is a schematic sectional view of an apparatus for manufacturing substrate sheets for optical recording media empolying the molding roll of the present invention.

Fig. 16 is a schematic sectional view showing another embodiment of an apparatus for manufacturing substrate sheets for optical recording media employing the molding roll of the present invention.

DETAILED DESCRIPTION OF THE INVENTION

The present invention will be described in detail in reference to drawings.

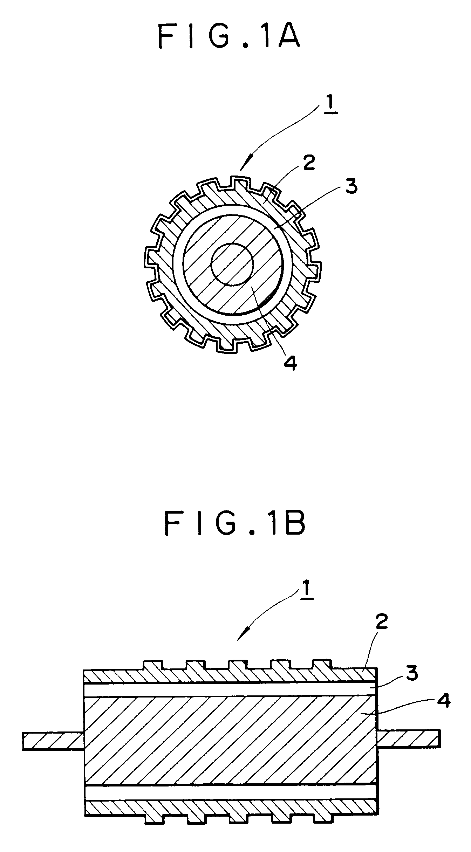

Fig. 1A is a schematic section of a molding roll 1 of the present invention in a vertical direction to the peripheral surface thereof, and Fig. 1B is a schematic section of the molding roll 1 in a parallel direction to the peripheral surface thereof.

In Figs. 1A and 1B, reference numeral 2 is a roll-shaped stamper, numeral 3 is an adhesive layer, and 4 is a roll base which is a reinforcing material.

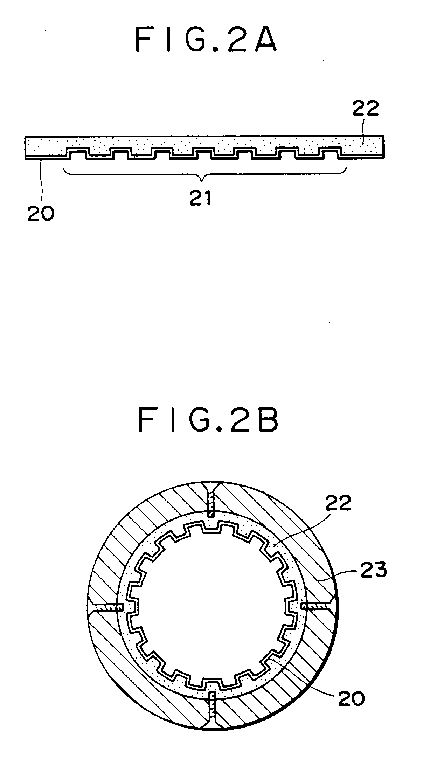

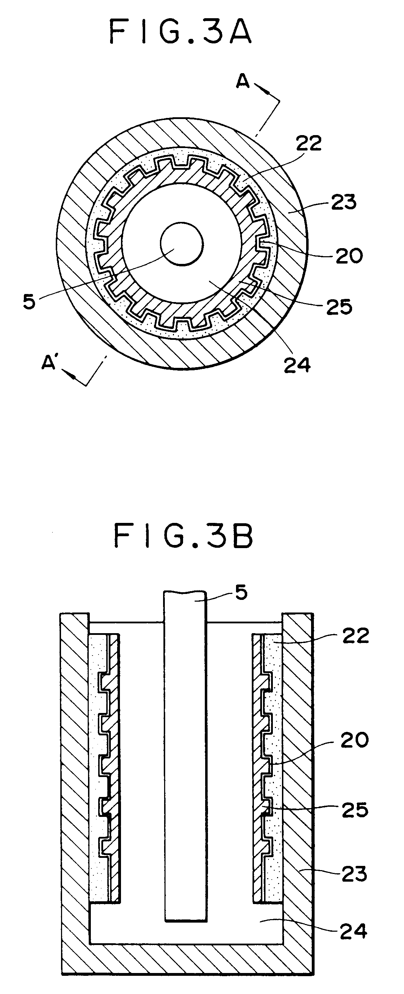

Figs. 2A and 2B and Figs. 3A and 3B are schematic views illustrating embodiments of a manufacturing method of the molding roll according to the present invention. That is, Fig. 2A shows a flexible master 22 having on the surface thereof a pattern 21 corresponding to a fine pattern which will be formed on the peripheral surface of a roll stamper 2, on the surface of which an electroconductive film 20 is formed. As shown in Fig. 2B, the flexible master 22 is disposed in a cylindrical mold 23 so that the back surface of the flexible master 22 may be brought into contact with the inside peripheral surface of the cylindrical mold 23. Next, this cylindrical mold 23 is filled with an electroforming liquid 24, and an anode electrode 5 is dipped in the electrolyte, as shown in Fig. 3A and Fig. 3B. In the cylindrical mold, electroforming is carried out at a constant current density between a cathode which is the electroconductive film 20 on the flexible master 22 and an anode electrode 5.

When an electroformed film 25 has reached a predetermined thickness, the electroforming is stopped, and the flexible master 22 having the electroforming film 25 is then released from the cylindrical mold 23. After washing with water, the electroforming film 25 is peeled from the flexible substrate 22 to obtain the cylindrical (roll-shaped) stamper 2.

In the last place, the roll-shaped stamper is reinforced with a roll base to obtain the molding roll shown in Fig. 1.

In the present invention, the flexible master 22 can be closely fixed on the inside peripheral surface of the cylindrical mold 23, and the inside surface of the flexible master 22 is preferably such as to meet the outer diameter accuracy (such as roundness) of the roll stamper to be manufactured. Preferably usable examples of the material of the flexible master 22 include thin films and sheets of synthetic resins such as polyester, polyolefin, polyamide and polyimide, metals and ceramics. The thickness of the flexible master 22 is in the range of $1.0 \times 10^{-3}$ to 10 mm, preferably $3.0 \times 10^{-3}$ to 5 mm, and it is preferred that the scatter of the thickness is ±10% of the thickness and does not exceed 50 μm.

Furthermore, the flexible master has the fine relief pattern 21 formed on its surface. As a process for forming the flexible master 22, the following processes can be preferably utilized.

(1) A process in which a thermoplastic resin is used, and the fine relief pattern is thermally formed on its surface by injection molding or compression molding.

(2) A process in which a photosensitive resin layer such as a 2P material is formed on a substrate for the flexible master, and the surface of the stamper is then transferred thereto by the so-called 2P method to form the relief pattern thereon.

(3) A pattern mask is formed on the substrate for the flexible master by the Hotorin process, and this mask is used to form the relief pattern by etching or lift-off. In the former case, the substrate itself is etched, and in the latter case, the pattern layer is formed on the substrate, thereby forming the relief pattern.

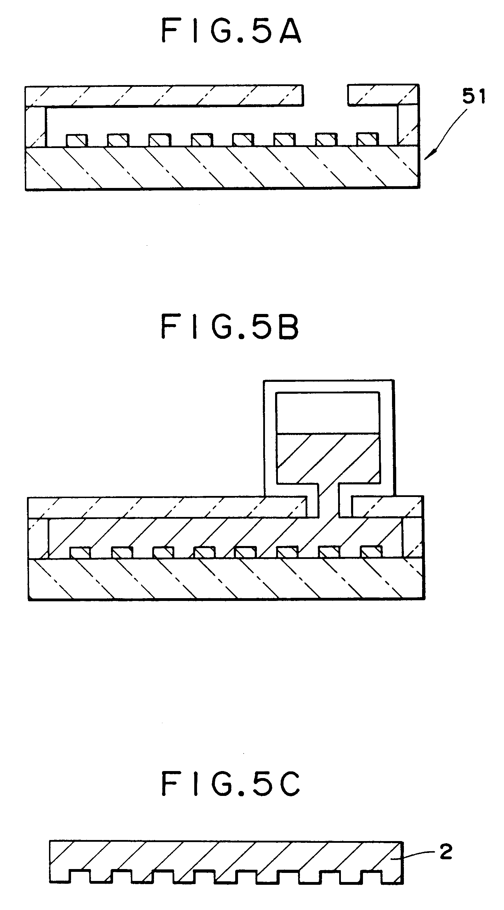

(4) A method using a casting technique in which as shown in Figs. 5A, 5B and 5C, a liquid resin is poured into a casting cell 51 [Fig. 5B], followed by polymerizing, whereby the flexible master 22 can be directly prepared.

(5) A method in which the relief pattern is directly formed on the substrate for the flexible master or a layer provided thereon by a mechanical cutting means.

In the case of the roll stamper for molding the substrate for the optical recording medium, examples of the relief pattern include spiral patterns, concentric circle patterns and striped patterns corresponding to tracking grooves of optical discs and optical cards having a width of 1 to 4 $\mu$m, a pitch of 1 to 20 $\mu$m and a depth of about 200 to about 5000 Å as well as patterns corresponding to address pits having a width of 0.6 to 10 $\mu$m, a length of 0.6 to 20 $\mu$m and a depth of about 200 to about 5000 Å.

The electroconductive film 20 is formed on the surface, which is on the side a fine relief pattern is formed, of the flexible master formed in the above-mentioned manner. The electroconductive film formation may be carried out when the flexible master is in the form of a plate or is present in the cylindrical mold.

The electroconductive film 20 can be formed by a vacuum film formation technique such as sputtering or vapor deposition or electroless plating of a conductive metal such as nickel, and this film 20 which functions as a cathode in the electroforming step is connected to a minus side of an electric source.

This flexible master 22 having the thus formed fine relief pattern is closely fixed on the inside surface of the cylindrical mold, and this close fixing state has influence upon the accuracy of the outer diameter of the molding roll.

Therefore, in order to obtain this close fixing state stably, a means for vacuum-chucking the flexible master in the cylindrical mold may be provided, or alternatively the flexible master may be temporarily fixed by screws or the like [Fig. 2B].

The cylindrical mold, in which the flexible master having the fine relief pattern with the electroconductive film 20 is installed on the inside peripheral surface thereof, is then dipped in an electrolysis tank. Next, the electroconductive film 20 is utilized as the cathode, and the electroforming is then carried out at a given current density between the cathode and the anode electrode 5.

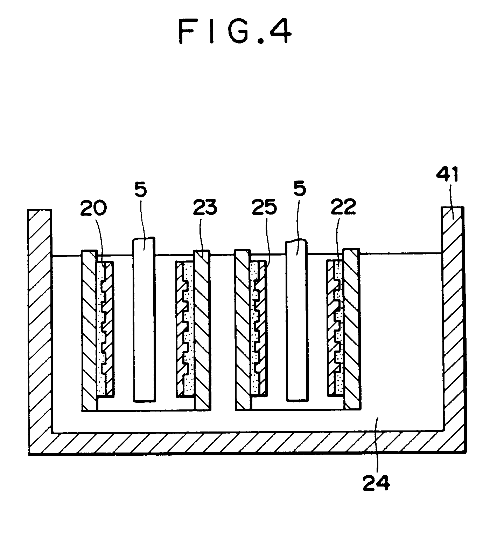

Figs. 3A and 3B show an embodiment in which the cylindrical mold equipped with the substrate constitutes one electrolysis tank, but the cylindrical mold may be dipped in the large electrolysis tank. Particularly, the latter has advantages that many cylindrical molds can be treated simultaneously and some of them can be taken out during the electroforming to be submitted easily for inspection or processing. Fig. 4 shows an embodiment in which the two cylindrical molds 23 are simultaneously dipped and electroformed in the electrolyte 24 in the electrolysis tank 41.

At the time when the electroforming film 25 has reached a predetermined thickness, the electroforming is brought to an end, and the flexible master 22 having the electroforming film 25 is taken off from the cylindrical mold 23 and the electroforming film 25 is then peeled from the flexible substrate 22, thereby obtaining the roll stamper.

The thickness of the electroforming film can be controlled basically by regulating quantity of electricity, i.e., current x time, but in fact, it is important to control the deformation and the peeling of the film which are attributed to the stress of the electroforming film caused by the unevenness of current density and film formation velocity.

Electroforming is carried out with a current density of 3 to 5 A/dm$^2$ using a constant-current source or a constant-voltage source. The temperature of the electroforming liquid is also one of the important factors for determining the quality of the film and the velocity of the film formation, and usually it is in the range of 40 to 60°C. When a temperature in this range is employed and the liquid is sufficiently stirred during the electroforming step, the stable film having no unevenness can be formed.

In forming the film, at an early stage (until about 0.1% of the final thickness of the electroforming film), electroforming is carried out with a current density (e.g., about 3 A/cm$^2$) at the low film formation velocity, and then, with a raised current density (e.g., about 5 A/dm$^2$), accomplished at a high film formation velocity.

According to the above-mentioned procedure, the electroforming film having a predetermined thickness is formed so that the residual stress may not remain at the time of the film formation, and the electroformed film and the flexible substrate are then released from the cylindrical mold. Afterward, the flexible substrate is peeled from the electroforming film, whereby the good roll stamper having neither distortion nor deformation is obtained.

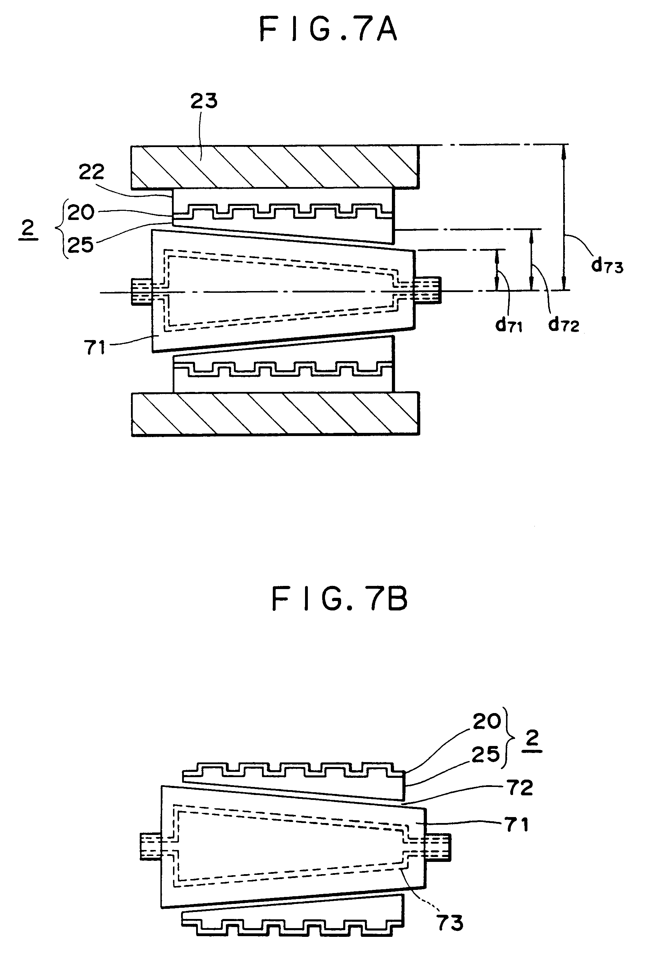

The roll stamper obtained by the above-mentioned procedure can be used as the molding roll by itself, and a mechanical reinforcement may be given in accordance with the thickness of the electroformed film. Examples of the reinforcement technique include a manner in which if necessary, the inside peripheral surface of the roll-shaped electroforming film is polished, and the roll-shaped stamper is fixed on the roll base by an organic or an inorganic adhesive 61 or screws, as shown in Figs. 1A and 1B, and another manner in which the inside peripheral surface of the electroformed film is polished in the form of a taper, and the electroforming film is then detachably fitted on the previously tapered roll base, as shown in Fig. 7B.

The manufacture of the molding roll 1 by the use of the roll stamper is preferably carried out after completion of the electroforming and before the release of the roll stamper from the cylindrical mold.

That is, in either case of the above-mentioned reinforcing manners, the axis and the rotary surface of the molding roll are required to have high accuracy, and therefore vibratory motion and rotary unevenness of the axis as well as the movement of the rotary surface must be sufficiently controlled. In order to meet this requirement, the operations for manufacturing the molding roll, i.e., the polishing of the inside peripheral surface of the electroforming film and the fixing and fitting of the roll base are carried out utilizing, as a processing frame and a processing foundation (fundamental surface), the cylindrical mold in which the flexible master is installed, whereby the high processing accuracy can be obtained and thus the high-quality molding roll can be manufactured.

In the maintenance of the stamper surface of the molding roll, for example, it is required to remove soils on the surface which are involved in the resin molding step. In the case of such a molding roll as shown in Figs. 7A and 7B, the roll-shaped stamper 2 can be detachably fitted on the roll base 71, so that the maintenance of the molding roll can be achieved only by exchanging the roll-like stamper.

The inside peripheral surface of the roll stamper according to the present invention can be polished in a usual manner such as lathe processing.

The cylindrical mold which can be used in the present invention preferably has satisfactory stiffness, uniform wall thickness and excellent surface accuracy on inside and outside peripheral surfaces. The inner diameter of the cylindrical mold 23 determines the outer diameter of the roll-shaped stamper, and processing accuracy such as the roundness of the inside surface of the cylindrical mold is directly connected with the accuracy of the outer diameter of the roll-shaped stamper. Taking these points into consideration, the cylindrical mold preferably is excellent in the roundness of the inside and outside peripheries, and such a cylindrical mold can be formed from a metal, ceramics or a synthetic resin inclusive of a reinforced plastic such as FRP.

In the case that the molding roll for molding substrates for optical cards which has the relief pattern corresponding to striped pregrooves and prepits is manufactured by installing the flexible master in the cylindrical mold so that the pregroove pattern may be arranged in parallel with the peripheral direction of the cylindrical mold, the molding roll can be obtained which can mold the substrates for optical cards having high accuracy and less defects such as breakage and peeling.

This reason will be described as follows:

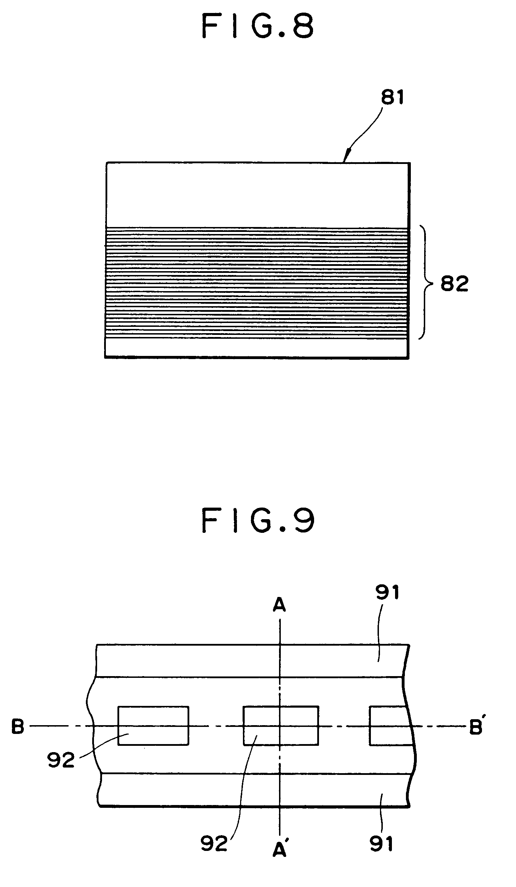

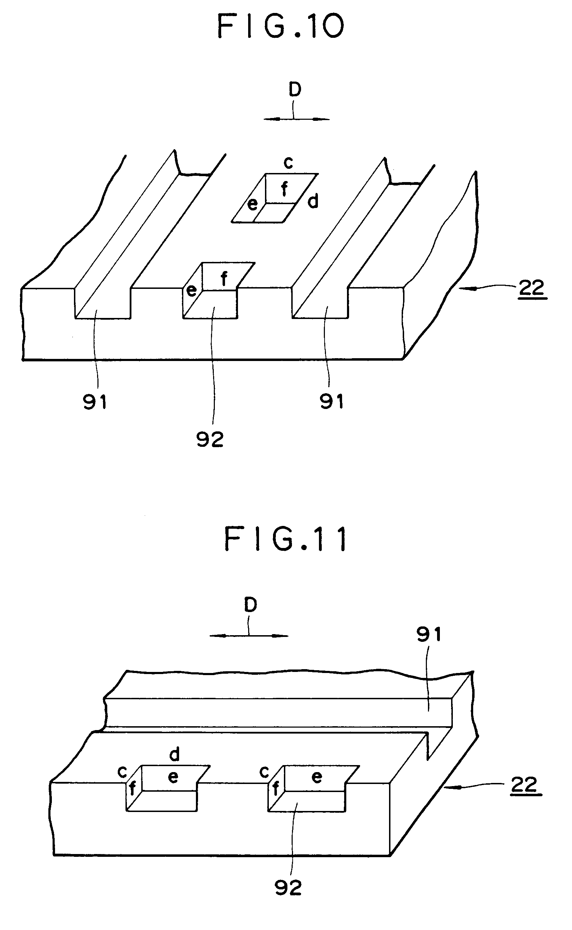

Fig. 8 shows a plan view of the substrate for the optical card. As shown in Fig. 8, the optical card is provided with a preformat having a size of 85 mm x 54 mm and a width of 31 mm in parallel with a longitudinal direction. Fig. 9 is an enlarged view showing a preformat pattern including a pattern corresponding to the pregrooves of the flexible master for molding the optical card shown in Fig. 8. On the track in Fig. 9, there are shown a pattern 91 corresponding to the pregrooves for AT and another pattern 92 corresponding to prepits. Figs. 10 and 11 show sectional views along the lines A-A′ and B-B′ of the relief pattern of the above-mentioned track graven on the flexible master, respectively.

Now, when the flexible master having the preformat pattern shown in Fig. 9 is installed along the inside periphery of the cylindrical mold, the following results can be obtained by comparing (1) a case where the line A - A′ is placed in parallel with the peripheral direction D with (2) another case where the line B - B′ is placed in parallel with the peripheral direction D. That is, in the case of (1) (Fig. 10), with regard to the width of the pattern 91 corresponding to the pregrooves and the side C of the pattern 92 corresponding to the prepits, the length $a_0$ of an opening is smaller than the length $b_0$ of a bottom. On the other hand, in the case of (2) (Fig. 11), such a phenomenon does not occur on the pattern 91 corresponding to the grooves, and only with regard to the side C of the pattern 92 corresponding to the pits, the opening is smaller than the bottom.

As a result, in the roll stamper formed by the process of (2), the sectional shape of the convex pattern for the formation of the pregrooves does not take such a reverse taper shape that the width of the pattern increases toward its tip. Therefore, when this molding roll is used so as to continuously form the substrates for the optical cards, neither breakage nor peeling occurs in the vicinity of the pregrooves of the substrates, so that the substrates for the optical cards having less defects can be obtained.

The sectional shape of the pattern 92 corresponding to the prepits is preferably formed so that its surface f may have an angle $\theta_0$ to a base, and in such a case, when the pattern 92 is installed in the cylindrical mold, the opening of the pattern 92 is equal to or larger than the base thereof. At this time, the angle $\theta_0$ is 10° to 85°, preferably 25° to 83°, more preferably from 30° to 80°.

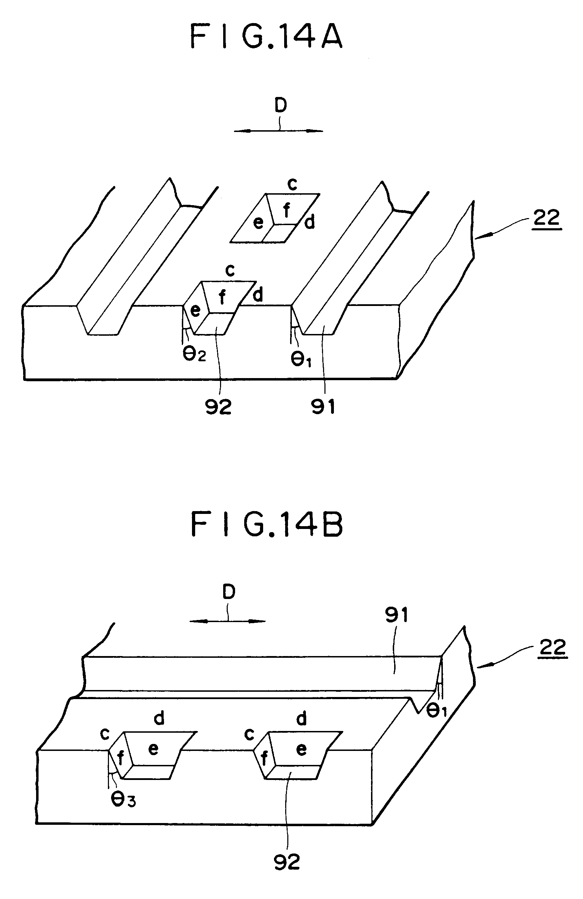

In the case that the pattern 91 and 92 of the flexible master are formed as shown in Fig. 14 and the pattern 91 corresponding to the pregrooves is formed so that the vertically sectional shape of the pattern 91 may be grooves (having an angle of $\theta_1$ to the base) and so that surfaces e and f of the pattern 91 corresponding to the prepits may have angles of $\theta_2$ and $\theta_3$, respectively, the molding roll can be prepared which can provide the substrates for the optical cards having less defective and high accuracy without restricting the direction of the preformat when the flexible master 22 having the preformat is installed in the cylindrical mold 23.

At this time, values of $\theta_1$, $\theta_2$ and $\theta_3$ are from 10° to 85°, preferably from 25° to 83°, more preferably from 30° to 80°. The flexible master having the above-mentioned fine and accurate preformat pattern can preferably be manufactured by the aforesaid casting method which is excellent in transfer properties of a matrix. It can be achieved by a method described in Japanese Patent Laid-open No. 1-275018 to incline the wall portions of the patterns 91 and 92 corresponding to the above-mentioned pregrooves and prepits. For example, the composition of a chromium layer formed on a glass original plate is continuously changed at the time of the formation of the original plate to prepare a matrix, and the flexible master is then molded by casting and by the use of the matrix.

In the present invention, when the roll base 4 is used as a reinforcing member for the roll-shaped stamper 2, the roll base preferably has high hardness and good thermal conductivity and permits easily achieving the mirror processing of its peripheral surface, and examples of the material of the roll base include steel, chromium steel, aluminum and steel for molds (maraging steel). The roll,base peripheral surface is preferably processed so that its surface accuracy may be substantially equal to or higher than the surface accuracy of the substrate for the optical recording medium to be molded, and for example, the surface accuracy of the roll base peripheral surface is 1 µm or less, preferably 0.5 µm or less, more preferably 0.2 µm or less.

If necessary, the roll base may be coated with a hard film such as titanium nitride or treated with plating such as chromium plating.

The diameter of the roll base 11 depends upon its application, but when the roll base is used as the roll base for the molding of the substrates for the optical cards, the diameter is set to 100 to 500 mm, preferably 200 to about 400 mm.

Next, an apparatus and a method for manufacturing a substrate sheet for optical recording medium by the use of the molding roll of the present invention will be described in detail.

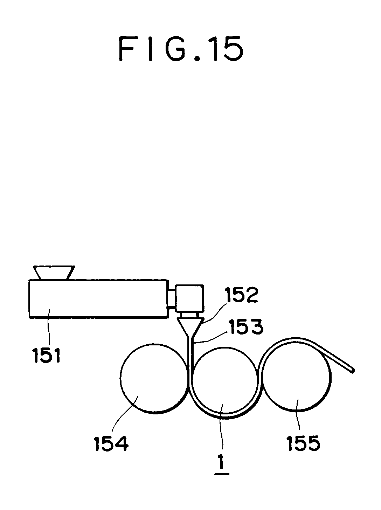

That is, in Fig. 15, resin pellets thrown into the extruder 151 are first heated, melted and extruded in a barrel of the extruder 151, pressed by a screw in a molding machine, and then molded into a sheet shape by the T-die 152. The T-die is preferably disposed so that the resin sheet may be extruded between the molding roll 1 and the mirror roll 154, because such a disposition permits transferring the preformat pattern precisely.

Next, the molded resin sheet extruded from the T-die is pressed between the molding roll 1 and the mirror roll to transfer the preformat pattern. At this time, it is preferred that the molded resin sheet 135 is extremely close to a melting state, since the resin can be sufficiently pressed into recesses on the stamper to transfer the fine pattern precisely. Accordingly, the temperature of the T-die preferably is as high as possible, so long as the resin does not decompose, and it is preferably in the range of the glass transition temperature (hereinafter abbreviated to "Tg") of the molded resin + 110°C to Tg + 200°C, particularly Tg + 130°C to Tg + 190°C. For example, in the case of a polycarbonate resin, the temperature of the T-die is 260 to 340°C, preferably 280 to 330°C, more preferably 290 to 320°C.

If the resin sheet is cooled between the T-die 152 and the molding roll 1, the preformat pattern is not sufficiently transferred and the double refraction tends to occur. Therefore, the distance between the T-die 32 and the pressing point of the molding roll 1 and the first mirror roll 154 is 20 cm or less, preferably 15 cm or less, more preferably 10 cm or less, and the temperature of an ambient atmosphere therebetween preferably is 60°C or more.

In order to precisely extrude the resin sheet toward the pressing point, the constitution of vertical extrusion is preferably taken as shown in Fig. 15 in which the pressing point is disposed vertically under the T-die. This reason is that since the resin is nearly in the melting state, the vertical extrusion permits extruding the resin toward the pressing point more accurately than horizontal extrusion.

Surface temperatures of the molding roll 1 and the mirror rolls 154, 155 depend upon the kind of resin to be used. For example, in the case that polycarbonate is used, the temperature of the molding roll 1 is usually set to 110-145°C considering the heat deformation temperature of the polycarbonate, that of the first mirror roll is set to 90-135°C, and that of the third mirror roll is set to 120-150°C. In the case that amorphous polyolefin is used, the temperature of the molding roll 1 is set to 120-145°C, that of the first mirror roll is set to 100-135°C, and that of the third mirror roll is set to 120-150°C. According to the present invention, even if the set temperature fluctuates in this range, the transfer accuracy of the preformat pattern and the double refraction do not largely fluctuate, so that the homogeneous and excellent substrate sheet for the optical recording medium can be formed. The temperatures of these rolls can be controlled, for example, by heating them with a heater incorporated in the rolls or by circulating a hot medium to the central portions of these rolls.

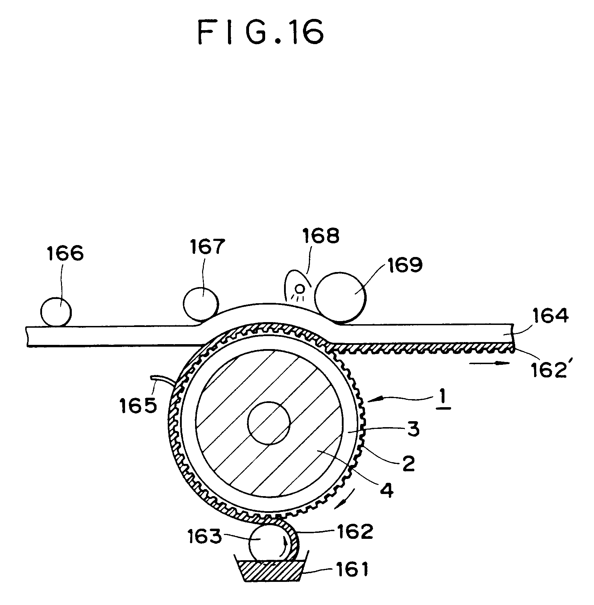

Fig. 16 is an illustrative view of another apparatus and method for manufacturing a substrate sheet for the optical recording medium by the use of the molding roll according to the present invention. In Fig. 16, reference numeral 161 is a feed tank for a photocurable resin such as an ultraviolet or an electron beam curable resin, and a resin layer 162 is formed on the surface of the molding roll by an ink feed roll 163. Next, the resin layer 162 on the molding roll is pressed against a sheet substrate 164 by a nip roll 167. Then, the resin layer 162 is irradiated with ultraviolet rays or electron beams by an ultraviolet or an electron beam irradiation means 168 to cure the photocurable resin layer and integrate the resin layer with the substrate sheet. Afterward, the substrate sheet having the resin layer is released from the molding roll 1 by using a releasing roll 169, thereby obtaining the substrate sheet for the optical recording medium.

In the present invention, as the photocurable resin, there can be used photopolymerizable prepolymers, photopolymerizable monomer and usual photocurable resins containing a photo-initiator. Usable examples of the photopolymerizable prepolymers include acrylates such as unsaturated polyesters, epoxy acrylates, urethane acrylates and polyether acrylates, and usable examples of the photopolymerizable monomer include monofunctional monomers such as lauryl acrylate, 2-ethylhexyl acrylate, 1,6-hexanediol monoacrylate and dicyclopentadiene acrylate as well as polyfunctional monomers such as dicyclopentenyl acrylate, 1,3-butanediol diacrylate, polyethylene glycol diacrylate, pentaerythritol triacrylate. In addition, examples of the photo-initiator include usually usable photo-initiators such as benzophenone, benzoin and its derivatives, benzoin ether and benzyldimethyl ketal.

The photocurable resin preferably has good adhesive properties to the sheet substrate 1, and its example is a usual photocurable adhesive. Typical examples of the photocurable adhesive include urethane acrylates, epoxy acrylates and polyester acrylates. The coating film thickness of the photocurable resin is 50 μm or less, preferably 20 μm or less, so as to inhibit the substrate for the optical recording medium from warping owing to the curing shrinkage of the photocurable resin layer.

This thickness of the film can be adjusted by a blade 165. In the present invention, no particular restriction is put on the coating manner of the photocurable resin, and it can be selected from known coating manners such as roll coating and bar coating in compliance with the viscosity, the coating film thickness and the like of the coating resin.

In the present invention, the feed rate of the sheet substrate 164 is from 0.02 m/minute to 7 m/minute, particularly from 0.05 m/minute to 5 m/minute from the viewpoints of the productivity of the substrates for the optical recording media, the entrainment prevention of air bubbles and the improvement of adhesive properties.

The material of the sheet substrate 164 of the present invention preferably is transparent to recording/reproducing light and has large mechanical strength and less double refraction and hygroscopicity. Preferable examples of such a material include polycarbonate resins, acrylic resins, epoxy resins, polyester resins and polyolefin resins, and above all, the polycarbonate resins, acrylic resins and polyolefin resins can be suitably used.

The thickness of the sheet substrate is 2.0 mm or less, preferably 0.2 to 1.4 mm. That is, the sheet substrate having the thickness in this range can exclude the influence of dust and the like on the surface of the substrate, when irradiation is made with recording light or reproducing light from the side of the substrate.

As described above, according to the present invention, a seamless molding roll having no step on its surface can easily be manufactured. The present invention has advantages such that (1) expensive facilities is not required, (2) high accuracy of the fine relief pattern is securised and (3) the shape of the stamper is cylindrical.

According to the present invention, a flexible master having an electroforming film is brought into close contact with the inside peripheral surface of a cylindrical mold, and a molding roll is prepared therefrom while the state of the close contact is maintained. Therefore, the manufacture of the molding roll can be achieved utilizing the cylindrical mold as foundation, so that it is possible to obtain the molding roll having high processing accuracy.

Moreover, according to the present invention, there can be obtained, at a low cost, the molding roll for molding substrate sheets for optical recording media which can continuously transfer a preformat pattern with high accuracy.

Next, the present invention will be described in more detail in reference to examples.

<u>Example 1</u>

In the first place, a flexible master was manufactured in the manner shown in Figs. 5A, 5B and 5C as follows.

First, a matrix 52 which would be used in a casting cell 51 was prepared. That is, a chromium film having a thickness of 3000 Å was vacuum-deposited on a mirror-polished glass plate having a thickness of 2.3 mm. Afterward, on this chromium film, a positive photoresist (trade name AZ-1350; Hoechst Japan Inc.) having a thickness of 1000 Å was formed by a spin coating process.

Next, this photoresist layer was exposed to light through a mask to print a pattern corresponding to a preformat for optical cards thereon, and development was then carried out with a developing solution (trade name AZ-312; Hoechst Japan Inc.) to form a resist pattern. Afterward, the exposed portions of the chromium film were etched with 6 N hydrochloric acid. After sufficient washing and drying, the remaining photoresist was incinerated and removed by the use of an oxygen plasma incineration method, whereby the matrix was obtained.

In this example, a preformat for the optical cards was composed of 2583 pregrooves having a width of 3 μm, a pitch of 12 μm and a depth of 2700 Å and prepits having a width of 3 μm, a pitch of 12 μm, a depth of 2700 Å and a length of 6 μm which were formed on lands between the grooves, and the sectional shape of the pregrooves and the prepits in a vertical direction to them was rectangular.

Next, the casting cell shown in Fig. 5A was constructed using the matrix 52, and a liquid resin having the following composition was poured into a cavity. Afterward, the resin was heated at 120 °C for 2 hours and then slowly cooled over 10 hours to cure the same, and it was then released therefrom, thereby obtaining the flexible master having a thickness of 0.5 mm.

| Composition of Liquid Resin | |
|---|---|
| Methyl methacrylate | 70 parts by weight |
| Tertiarybutyl methacrylate | 25 parts by weight |
| Polyethylene glycol dimethacrylate (molecular weight 620) | 5 parts by weight |

On the surface of this flexible master on which the preformat patter was formed, a nickel film of 500 Å in thickness was formed by an electroless plating process to make the above-mentioned surface electroconductive. Next, this flexible master was fixed by screws in a stainless steel cylindrical mold having an inner diameter of 200 mm, an outer diameter of 220 mm and an inside and an outside peripheral surface accuracy of 0.2 so that the pregroove pattern might be arranged in parallel with the peripheral direction of the cylindrical mold as shown in Fig. 11 and so that the back surface of the flexible master might be brought into close contact with the inside peripheral surface of the cylindrical mold. Afterward, as shown in Fig. 4, the cylindrical mold was dipped in an electroforming tank, and a nickel anode electrode 5 was installed in the center of the cylindrical mold and electroforming was then carried out utilizing the nickel film on the surface of the flexible master as a cathode for 6 hours to deposit a nickel film having a thickness of 200 μm.

The composition of an electroforming liquid was as follows:

| Nickel sulfamate | 600 g/l |
|---|---|
| Boric acid | 40 g/l |
| Nickel chloride | 5 g/l |
| Leveling agent | 20 mg/l |

and the temperature of the liquid was from 40 to 60°C. The electroforming was carried out by using constant current (Nikka Engineering Co., Ltd.), where current density was 3 A/cm$^2$ at an early stage and gradually raised up to 4 A/dm$^2$ and finally to 5 A/dm$^2$.

Next, the cylindrical mold was pulled up from the electroforming tank and then washed with water, and the inside peripheral surface of the electroforming film was polished to bring its surface roughness to 0.1 mm or less. In this case, the polishing was effected so that the confronted surfaces of the inside periphery of the electroformed film might be parallel to each other, utilizing the outside peripheral surface of the cylindrical mold as a fundamental surface.

A roll base having a diameter of 190 mm was inserted,into the cylindrical mold, and positioning was made so that the central axis of the roll base might be in accord with the temporary central axis of the cylindrical mold, utilizing the outside peripheral surface of the cylindrical mold as the foundation. Afterward, an adhesive (trade name BR Resin; made by Mitsubishi Gas Chemical Company, Inc.) was poured into the space between the peripheral surface of the roll base and the inside peripheral surface of the electroformed film, and it was then cured.

The roll base on which the electroforming film and the flexible master were fixed was pulled out from the cylindrical mold, and the electroformed film was then separated from the flexible master, thereby obtaining a molding roll.

This molding roll 1 was attached to a molding apparatus shown in Fig. 15, and polycarbonate 153 (trade name Panlite L-1225; made by Teijin Chemicals Co., Ltd.) was then extruded from an extruder 151 (trade name SHT 90; Hitachi Shipbuilding & Engineering Co., Ltd.) to mold a substrate sheet for optical cards having a thickness of 0.4 mm and a width of 30 cm.

With regard to molding conditions in this case, the temperature of a T-die 152 was 300°C, the surface temperature of the molding roll was 150°C, the carrying velocity of the molded resin sheet was 3 m/minute, and the ratio of peripheral speeds of the molding roll 1 and the mirror roll 155 was set to 1.001, and a molding time was 3 hours.

For the transfer accuracy of each preformat pattern-transferred portion on the thus obtained substrate sheet, the section of the pregrooves-transferred portion in a direction vertical to the 9 pregrooves or the sections of the prepits-transferred portion in directions parallel and vertical to the pregrooves were observed by an electronic surface morphology analyzer (trade name ESA-3000; Erionix Co., Ltd.), and then the plane surfaces of the preformat pattern-transferred portion were further observed by an optical microscope (x 400).

As the results of the above-mentioned observation, the occurrence ratio of defects such as breakages and cracks in the vicinity of the pregrooves and the prepits of the substrates for optical cards was evaluated.

The evaluation of the occurrence ratio was made as follows: A substrate having a relief preformat was first prepared, and when even one breakage or crack was present in the vicinity of the relief preformat, the substrate was estimated to be defective. Thus, the occurrence ratio was calculated from the formula

$$A/B \times 100$$

A:   the number of the defective relief preformats, and
B:   the total number of the prepared relief preformats.

Reference Example 1

The same procedure as in Example 1 was effected except that a flexible master was installed in a cylindrical mold so that a pregroove pattern 91 might be vertical to a peripheral direction as shown in Fig. 10, thereby manufacturing a molding roll, and a substrate sheet for optical cards was molded by the use of the thus manufactured molding roll.

Example 2

The same procedure as in Example 1 was effected except that an angle $\theta_0$ of a surface f to a base in a prepit pattern 92 of a flexible master was 30°, thereby preparing a molding roll, and a substrate sheet for optical cards was molded by the use of the thus prepared molding roll.

Example 3

The same procedure as in Example 1 was effected except that when a chromium film was formed on a glass plate in a matrix formation step, a mixing ratio of nitrogen and oxygen was continuously changed to form the films, thereby preparing the matrixes, and flexible masters were obtained by the use of these matrixes.

In each of the thus obtained flexible masters, the sectional shape of a pregroove pattern in a vertical direction was a reverse trapezoid having $\theta_1 = 55°$, and angles of the surfaces e and f to a base in a prepits pattern were $\theta_2 = 55°$ and $\theta_3 = 55°$, respectively.

This flexible master was fixed on a cylindrical mold so that the pregroove pattern of the flexible master might be parallel to the peripheral direction of the cylindrical mold.

Next, electroforming was carried out in the same manner as in Example 1, and the inside peripheral surface of the resultant electroformed film was then polished in a taper form so that the electroformed film might be fitted on a roll base 71 in a taper form in the sectional shape thereof having $d_{71} = 185$ mm and $d_{72} = 190$ mm on the basis of the outside peripheral surface of the cylindrical mold. Afterward, the electroformed film 25 was mounted on the roll base 71 so as to be $d_{73} = 205.7$ on the basis of the outside peripheral surface of the cylindrical mold, and the roll base having the electroforming film was pulled out from the cylindrical mold. The resultant roll-shaped stamper was then separated from the flexible master and a fixture 72 was inserted between the roll-shaped stamper and the roll base, thereby obtaining a molding roll. In this case, a passage 73 of a hot medium for heating the molding roll was buried in the roll base.

A substrate sheet for optical cards was molded in the same manner as in Example 1 by the use of this molding roll, and evaluation was then made.

Example 4

The same procedure as in Example 3 was effected except that a flexible master was fixed on a cylindrical mold so that a pregroove pattern of the flexible master might be vertical to the peripheral direction of the cylindrical mold, thereby obtaining a molding roll. A substrate for optical cards was molded by the use of the thus obtained molding roll, and evaluation was then made.

Example 5

An apparatus for manufacturing a substrate sheet for optical cards shown in Fig. 16 was prepared by the use of a molding roll obtained in Example 3.

That is, a polycarbonate sheet having a thickness of 0.4 mm was used as a sheet substrate 164, and an ultraviolet-curing resin layer having a thickness of 40 $\mu$m and having the following composition was formed on the surface of the molding roll:

| Composition of Ultraviolet-curing Resin | |
|---|---|
| Urethane acrylate | 30 parts |
| Neopentyl glycol-modified trimethylolpropane diacrylate | 67 parts |
| 1-hydroxycyclohexyl phenyl ketone | 3 parts |

A sheet substrate 164 was carried at 2.4 m/minute, and after the molding roll was brought into close contact with the sheet substrate, the ultraviolet-curing resin layer was irradiated with ultraviolet rays (2 kW high-pressure mercury vapor lamp, 300 mW/cm$^2$) through the sheet substrate to cure the ultraviolet-curing resin layer and to integrate the resin layer with the substrate sheet. Next, the substrate sheet was released from the molding roll to obtain the substrate sheet for optical cards. The thus obtained substrate sheet was evaluated in the same manner as in Example 1.

The evaluation results of the substrate sheets for optical cards prepared in Examples 1 to 5 and Reference Example 1 are shown in Table 1.

Table 1

| | Defect Occurrence Ratio |
|---|---|
| Example 1 | 30% |
| Example 2 | 4.4% |
| Example 3 | 0.01% |
| Example 4 | 1.7% |
| Example 5 | 0.8% |
| Reference Example 1 | 70% |

## Claims

1. A method for manufacturing a member which is roll-shaped, seamless and has a relief pattern on a peripheral surface thereof, which method comprises the steps of:

   (a) disposing a flexible master (22) having a pattern (21) corresponding to the relief pattern on the surface thereof in a cylindrical mold (23) so that the back surface of the flexible master contacts the inside peripheral surface of the mold,

   (b) electroforming a roll-shaped member (25) on the surface of the flexible master (22), and

   (c) removing the flexible master (22) having the roll-shaped member (25) from the cylindrical mold (23) and separating the roll-shaped member (25) from the flexible master (22), characterised in that the roll-shaped member (25) is processed into a roll-shaped stamper (2) for molding a substrate for an optical recording medium, and the electroforming in the second step is carried out at a temperature of 40°C to 60°C and at a current density of 3 to 5 A/dm$^2$ to prevent distortion of the roll-shaped member.

2. The method of claim 1, wherein the roll-shaped stamper is for molding a substrate sheet for an optical card having a stripe-shaped pre-grooves and pre-pits and has a pattern corresponding to the stripe-shaped pre-grooves (91) and pre-pits (92) on the peripheral surface thereof.

3. The method of claim 2, wherein in the first step the flexible master is installed in the cylindrical mold so that the pattern corresponding to the pre-grooves of the flexible master is parallel to the axis of the cylindrical mold.

## EP 0 481 753 B1

**4.** The method of claim 3, wherein there is employed a flexible master in which the pre-pits are trapezoidal with a cross-section in a direction parallel to the axis of the cylindrical mold in which the sides (f) have a base angle $\theta_0$.

**5.** The method of claim 4, wherein the base angle $\theta_0$ of the trapezoids is 25-83°.

**6.** The method of claim 4, wherein the base angle $\theta_0$ of the trapezoids is 30-80°.

**7.** The method of claim 3, wherein there is employed a flexible master in which the pre-pits are trapezoids with a cross-section in a direction perpendicular to the axis of the cylindrical mold which have surfaces (e) which have a base angle $\theta_2$ and in which the cross-section in a direction parallel to the axis of the cylindrical mold has sides (f) having a base angle $\theta_3$ and in which the pre-groove pattern (91) in the flexible master is also trapezoidal with sides which have a base angle $\theta_1$, wherein $\theta_1$, $\theta_2$ and $\theta_3$ are from 10-85°.

**8.** The method claim 2, wherein in the first step, the flexible master is disposed in the cylindrical mold so that each pre-groove in the pattern of the flexible master lies in a respective plane perpendicular to the axis of the cylindrical mold, and the pre-pits are trapezoidal with a cross-section in a direction parallel to the axis of the cylindrical mold having sides (e) with a base angle $\theta_2$ and a cross-section in a direction perpendicular to the axis of the cylindrical mold having sides (f) with a base angle $\theta_3$, and in which the pre-groove pattern (91) in the flexible master is also trapezoidal with sides which have a base angle $\theta_1$, wherein $\theta_1$, $\theta_2$ and $\theta_3$ are from 10-85°.

**9.** The method of claim 7 or 8, wherein the base angles $\theta_1$, $\theta_2$ and $\theta_3$ are from 25-83°.

**10.** The method of claim 7 or 8, wherein the base angles $\theta_1$, $\theta_2$ and $\theta_3$ are from 30-80°.

**11.** A method for manufacturing substrate sheets for optical recording media, which method comprises:

(i) manufacturing a member which is roll shaped, seamless and has a relief pattern on a peripheral surface thereof, said method comprising the steps of:

(a) disposing a flexible master (22) having a pattern (21) corresponding to the relief pattern on the surface thereof in a cylindrical mold (23) so that the back surface of the flexible master contacts the inside peripheral surface of the mold,

(b) electroforming a roll-shaped member (25) on the surface of the flexible master (22), and

(c) removing the flexible master (22) having the roll-shaped member (25) from the cylindrical mold (23) and separating the roll-shaped member (25) from the flexible master (22), characterised in that the roll-shaped member (25) is processed into a roll-shaped stamper (2) for molding a substrate for an optical recording medium, and the electroforming in the second step is carried out at a temperature of 40°C to 60°C and at a current density of 3 to 5 A/dm$^2$ to prevent distortion of the roll-shaped member;

(ii) fixing the seamless stamper on the peripheral surface of a moulding roll; and

(iii) melting and extruding a resin to form a sheet of said resin, forming an impression on the surface of the resin sheet by means of the moulding roll so as to transfer a preformat pattern to the surface of the resin sheet the impression being made by passing the sheet between the moulding roll which has the seamless stamper fixed on its peripheral surface and a mirror roll disposed opposite to the moulding roll.

**Patentansprüche**

**1.** Ein Verfahren zur Herstellung eines Bauteils, das walzenförmig, nahtlos ist und eine Reliefstruktur an einer Umfangsfläche von diesem aufweist, wobei das Verfahren die Schritte umfaßt des:

(a) Anordnens eines flexiblen Musterstücks (22) mit einer der Reliefstruktur entsprechenden Struktur (21) an dessen Oberfläche in einer zylindrischen Form (23), so daß die Rückfläche des Musterstücks die Innenumfangsfläche der Form berührt,
(b) Galvanoformens eines walzenförmigen Bauteils (25) an der Oberfläche des flexiblen Musterstücks (22) und
(c) Entnehmens des das walzenförmige Bauteil (25) aufweisenden flexiblen Musterstücks (22) aus der zylindrischen Form (23) sowie Trennens des walzenförmigen Bauteils (25) von dem flexiblen Musterstück (22),

dadurch gekennzeichnet, daß das walzenförmige Bauteil (25) zu einem walzenförmigen Prägewerkzeug (2), um ein Substrat für ein optisches Aufzeichnungsmedium zu formen, verarbeitet und das Galvanoformen im zweiten Schritt bei einer Temperatur von 40 °C bis 60 °C sowie bei einer Stromdichte von 3 bis 5 A/dm$^2$, um eine Verformung des walzenförmigen Bauteils zu verhindern, ausgeführt wird.

2. Das Verfahren von Anspruch 1, in welchem das walzenförmige Prägewerkzeug dem Formen einer Substratfolie für eine optische Karte mit streifenförmigen Vorrillen sowie Vorgrübchen dient und eine den streifenförmigen Vorrillen (91) sowie Vorgrübchen (92) entsprechende Struktur an seiner Umfangsfläche besitzt.

3. Das Verfahren von Anspruch 2, in welchem im ersten Schritt das flexible Musterstück in der zylindrischen Form so angeordnet wird, daß die den Vorrillen des flexiblen Musterstücks entsprechende Struktur parallel zur Achse der zylindrischen Form ist.

4. Das Verfahren von Anspruch 3, in welchem ein flexibles Musterstück verwendet wird, in dem die Vorgrübchen trapezförmig mit einem Querschnitt in einer zur Achse der zylindrischen Form parallelen Richtung, bei welchem die Seiten (f) einen Basiswinkel $\theta_0$ haben, sind.

5. Das Verfahren von Anspruch 4, in welchem der Basiswinkel $\theta_0$ des Trapezes 25 - 83° beträgt.

6. Das Verfahren von Anspruch 4, in welchem der Basiswinkel $\theta_0$ des Trapezes 30 - 80° beträgt.

7. Das Verfahren von Anspruch 3, in welchem ein flexibles Musterstück verwendet wird, in dem die Vorgrübchen Trapeze mit einem Querschnitt in einer zur Achse der zylindrischen Form rechtwinkligen Richtung sind, die Flächen (e) mit einem Basiswinkel $\theta_2$ haben, und in dem der Querschnitt in einer zur Achse der zylindrischen Form parallelen Richtung Seiten (f) mit einem Basiswinkel $\theta_3$ hat und in dem die Vorrillenstruktur (91) im flexiblen Musterstück ebenfalls trapezförmig ist mit Seiten, die einen Basiswinkel $\theta_1$ haben, wobei $\theta_1$, $\theta_2$ und $\theta_3$ von 10 - 85° betragen.

8. Das Verfahren von Anspruch 2, in welchem im ersten Schritt das flexible Musterstück in der zylindrischen Form so angeordnet wird, daß jede Vorrille in der Struktur des flexiblen Musterstücks in einer jeweiligen Ebene rechtwinklig zur Achse der zylindrischen Form liegt, und die Vorgrübchen mit einem Querschnitt in einer zur Achse der zylindrischen Form parallelen Richtung, der Seiten (e) mit einem Basiswinkel $\theta_2$ hat, sowie mit einem Querschnitt in einer zur Achse der zylindrischen Form rechtwinkligen Richtung, der Seiten (f) mit einem Basiswinkel $\theta_3$ hat, trapezförmig sind, und bei dem die Vorrillenstruktur (91) im flexiblen Musterstück ebenfalls trapezförmig mit Seiten ist, die einen Basiswinkel $\theta_1$ haben, wobei $\theta_1$, $\theta_2$ und $\theta_3$ von 10 - 85° betragen.

9. Das Verfahren von Anspruch 7 oder 8, in welchem die Basiswinkel $\theta_1$, $\theta_2$ und $\theta_3$ von 25 - 83° betragen.

10. Das Verfahren von Anspruch 7 oder 8, in welchem die Basiswinkel $\theta_1$, $\theta_2$ und $\theta_3$ von 30 - 80° betragen.

11. Ein Verfahren zur Herstellung von Substratfolien für optische Aufzeichnungsmedien, wobei das Verfahren einschließt:

(i) Herstellen eines Bauteils, das walzenförmig, nahtlos ist und an einer Umfangsfläche von diesem eine Reliefstruktur aufweist, wobei dieses Verfahren die Schritte umfaßt des:

(a) Anordnens eines flexiblen Musterstücks (22) mit einer der Reliefstruktur entsprechenden Struktur (21) an dessen Oberfläche in einer zylindrischen Form (23), so daß die Rückfläche des Musterstücks die Innenumfangsfläche der Form berührt,
(b) Galvanoformens eines walzenförmigen Bauteils (25) an der Oberfläche des flexiblen Musterstücks (22) und
(c) Entnehmens des das walzenförmige Bauteil (25) aufweisenden flexiblen Musterstücks (22) aus der zylindrischen Form (23) sowie Trennens des walzenförmigen Bauteils (25) von dem flexiblen Musterstück (22), dadurch gekennzeichnet, daß das walzenförmige Bauteil (25) zu einem walzenförmigen Prägewerkzeug (2), um ein Substrat für ein optisches Aufzeichnungsmedium zu formen, verarbeitet und das Galvanoformen im zweiten Schritt bei einer Temperatur von 40 °C bis 60 °C sowie bei einer Stromdichte von 3 bis 5 A/dm$^2$, um eine Verformung des walzenförmigen Bauteils zu verhindern, ausgeführt wird;

(ii) Befestigen des nahtlosen Prägewerkzeugs an der Umfangsfläche einer Formwalze und

(iii) Schmelzen sowie Extrudieren eines Harzes, um eine Folie aus dem genannten Harz zu erzeugen, und Formen eines Eindrucks an der Oberfläche der Harzfolie mittels der Formwalze, um eine Vorformstruktur auf die Oberfläche der Harzfolie zu übertragen, wobei der Eindruck mittels Hindurchführens der Folie zwischen der Formwalze, die das an ihrer Umfangsfläche befestigte nahtlose Prägewerkzeug besitzt, und einer zur Formwalze gegenüberstehend angeordneten Spiegelwalze gefertigt wird.

**Revendications**

1. Procédé de fabrication d'un élément qui est en forme de rouleau, sans joint, et qui porte un motif en relief sur sa surface périphérique, lequel procédé comprend les étapes dans lesquelles :

   (a) on dispose une matrice flexible (22), ayant sur sa surface une matrice (21) correspondant au motif en relief, dans un moule cylindrique (23) afin que la surface arrière de la matrice flexible soit en contact avec la surface périphérique intérieure du moule,
   (b) on réalise par électroformage un élément (25) en forme de rouleau sur la surface de la matrice flexible (22), et
   (c) on enlève du moule cylindrique (23) la matrice flexible (22) comportant l'élément (25) en forme de rouleau et on sépare l'élément (25) en forme de rouleau de la matrice flexible (22), caractérisé en ce que l'élément (25) en forme de rouleau est traité pour devenir une estampe (2) en forme de rouleau destinée au moulage d'un substrat pour un support d'enregistrement optique, et l'électroformage de la deuxième étape est effectué à une température de 40°C à 60°C et à une densité de courant de 3 à 5 A/dm$^2$ pour empêcher la déformation de l'élément en forme de rouleau.

2. Procédé selon la revendication 1, dans lequel l'estampe en forme de rouleau est destinée au moulage d'une feuille de substrat pour une carte optique ayant des gorges primaires et des microcuvettes primaires en forme de bandes et comporte un motif correspondant aux gorges primaires (91) et aux microcuvettes (92) en forme de bande sur sa surface périphérique.

3. Procédé selon la revendication 2, dans lequel, dans la première étape, la matrice flexible est installée dans le moule cylindrique afin que le motif correspondant aux gorges primaires de la matrice flexible soit parallèle à l'axe du moule cylindrique.

4. Procédé selon la revendication 3, dans lequel on utilise une matrice flexible dans laquelle les micro-cuvettes primaires sont trapézoïdales, avec une section transversale, dans une direction parallèle à l'axe du moule cylindrique, dans laquelle les côtés (f) ont un angle de base $\theta_0$.

5. Procédé selon la revendication 4, dans lequel l'angle de base $\theta_0$ des trapézoïdes est de 25-83°.

6. Procédé selon la revendication 4, dans lequel l'angle de base $\theta_0$ des trapézoïdes est de 30-80°.

7. Procédé selon la revendication 3, dans lequel on utilise une matrice flexible dans laquelle les micro-cuvettes primaires sont des trapézoïdes avec une section transversale dans une direction perpendiculaire à l'axe du moule cylindrique, qui ont des surfaces (e) ayant un angle de base $\theta_2$ et dans lesquelles la section transversale dans une direction parallèle à l'axe du moule cylindrique comporte des côtés (f) ayant un angle de base $\theta_3$, et dans lequel le motif (91) de gorges primaires dans la matrice flexible est également trapézoïdal avec des côtés ayant un angle de base $\theta_1$, où $\theta_1$, $\theta_2$ et $\theta_3$ sont compris entre 10 et 85°.

8. Procédé selon la revendication 2, dans lequel, dans la première étape, la matrice flexible est disposée dans un moule cylindrique de façon que chaque gorge primaire du motif de la matrice flexible s'étende dans un plan respectif perpendiculaire à l'axe du moule cylindrique, et les micro-cuvettes primaires sont trapézoïdales avec une section transversale, dans une direction parallèle à l'axe du moule cylindrique, ayant des côtés (e) formant un angle de base $\theta_2$, et une section transversale, dans une direction perpendiculaire à l'axe du moule cylindrique, ayant des côtés (f) formant un angle de base $\theta_3$, et dans lequel le motif (91) de gorges primaires dans la matrice flexible est également trapézoïdal avec des côtés ayant un angle de base $\theta_1$, où $\theta_1$, $\theta_2$ et $\theta_3$ sont compris entre 10 et 85°.

9. Procédé selon la revendication 7 ou 8, dans lequel les angles de base $\theta_1$, $\theta_2$ et $\theta_3$ sont compris entre 25 et 83°.

10. Procédé selon la revendication 7 ou 8, dans lequel les angles de base $\theta_1$, $\theta_2$ et $\theta_3$ sont compris entre 30 et 80°.

**11.** Procédé de fabrication de feuilles de substrat pour des supports d'enregistrement optique, lequel procédé comprend :

(i) la fabrication d'un élément en forme de rouleau, sans joint et ayant un motif en relief sur sa surface périphérique, ledit procédé comprenant les étapes dans lesquelles :

(a) on dispose une matrice flexible (22) ayant, sur sa surface, un motif (21) correspondant au motif en relief, dans un moule cylindrique (23) de manière que la surface arrière de la matrice flexible soit en contact avec la surface périphérique intérieure du moule,

(b) on réalise par électroformage un élément (25) en forme de rouleau sur la surface de la matrice flexible (22), et

(c) on enlève du moule cylindrique (23) la matrice flexible (22) ayant l'élément (25) en forme de rouleau et on sépare l'élément (25) en forme de rouleau de la matrice flexible (22), caractérisé en ce que l'élément (25) en forme de rouleau est traité pour constituer une estampe (2) en forme de rouleau pour le moulage d'un substrat pour un support d'enregistrement optique, et l'électroformage dans la deuxième étape est effectué à une température de 40°C à 60°C et à une densité de courant de 3 à 5 A/dm$^2$ pour empêcher la déformation de l'élément en forme de rouleau ;

(ii) on fixe l'estampe sans joint sur la surface périphérique d'un rouleau de moulage ; et

(iii) on fait fondre et on extrude une résine pour former une feuille de ladite résine, formant une empreinte sur la surface de la feuille de résine au moyen du rouleau de moulage afin de reporter un motif de préformage sur la surface de la feuille de résine, l'empreinte étant réalisée par le passage de la feuille entre le rouleau de moulage, sur la surface périphérique duquel est fixée l'estampe sans joint, et un rouleau miroir disposé de façon à être opposé au rouleau de moulage.

# FIG.1A

# FIG.1B

# FIG.2A

22

21

20

# FIG.2B

22

23

20

# FIG.3A

# FIG.3B

# F I G.4

# F I G.5A

# F I G.5B

# F I G.5C

# FIG.6

# FIG.7A

# FIG.7B

# FIG.8

81

82

# FIG.9

A                91

B ──────────────────────── B'

92

92    A'    91

# FIG.10

# FIG.11

# FIG.12

# FIG.13

# F I G.14A

# F I G.14B

# FIG.15

# FIG.16